(19) Europäisches Patentamt
European Patent Office
Office européen des brevets

(11) Veröffentlichungsnummer : **0 251 113 B1**

(12) # EUROPÄISCHE PATENTSCHRIFT

(45) Veröffentlichungstag der Patentschrift : **02.01.91 Patentblatt 91/01**

(51) Int. Cl.$^5$ : **C08G 63/60**

(21) Anmeldenummer : **87108942.1**

(22) Anmeldetag : **23.06.87**

(54) **Vollaromatische mesomorphe Polyester, deren Herstellung sowie Verwendung.**

(30) Priorität : **27.06.86 DE 3621519**

(43) Veröffentlichungstag der Anmeldung : **07.01.88 Patentblatt 88/01**

(45) Bekanntmachung des Hinweises auf die Patenterteilung : **02.01.91 Patentblatt 91/01**

(84) Benannte Vertragsstaaten : **BE DE FR GB NL SE**

(56) Entgegenhaltungen :
**EP-A- 0 070 539**
**EP-A- 0 072 540**
**EP-A- 0 139 303**

(73) Patentinhaber : **BASF Aktiengesellschaft**
**Carl-Bosch-Strasse 38**
**D-6700 Ludwigshafen (DE)**

(72) Erfinder : **Kock, Hans-Jakob,Dr.**
**Benckiserstrasse 63**
**D-6700 Ludwigshafen (DE)**
Erfinder : **Portugall, Michael, Dr.**
**Raiffeisenstrasse 7**
**D-6706 Wachenheim (DE)**
Erfinder : **Hisgen, Bernd, Dr.**
**Goethestrasse 6**
**D-6703 Limburgerhof (DE)**
Erfinder : **Mertes, Juergen, Dr.**
**Rheingoenheimer Strasse 57**
**D-6700 Ludwigshafen (DE)**

EP 0 251 113 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft vollaromatische mesomorphe Polyester die unterhalb von 300°C eine flüssigkristalline fadenbildende Schmelze bilden, aufgebaut aus

a) 5 bis 25 Mol% wiederkehrenden Einheiten der Formel I

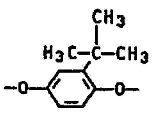

(I)

b) 5 bis 25 Mol% wiederkehrenden Einheiten der Formel II

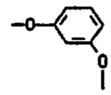

(II)

c) 10 bis 50 Mol% wiederkehrenden Einheiten der Formel III

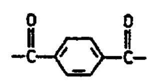

(III)

und

d) mindestens 10 Mol% wiederkehrenden Einheiten der Formel IV

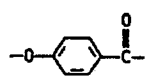

(IV)

wobei die Summe der molaren Anteile der Komponenten a), b), c) und d) jeweils 100 Mol% ergibt und das molare Verhältnis der Komponenten a) und b) zur Komponente c) im Bereich von 0,9 :1 bis 1,1 :1 liegt.

Außerdem betrifft die Erfindung ein Verfahren zur Herstellung derartiger Polyester, deren Verwendung zur Herstellung von Fasern, Folien, Überzügen und Formteilen sowie aus derartigen Polyestern als wesentlichen Komponenten erhältliche Formkörper.

Es wurden schon eine Reihe von vollaromatischen flüssigkristallinen Polyestern beschrieben. Aus der US-PS 4 224 433 sind flüssigkristalline Polyester, die sich aus Einheiten, die sich von 2,6-Dihydroxyanthrachinon, 3-Hydroxybenzoesäure, Terephthalsäure und/oder Isophthalsäure ableiten, bekannt. Die dort beschriebenen Polyester haben relativ hohe Schmelztemperaturen und sind erst bei Temperaturen über 300°C verarbeitbar. Darüberhinaus weisen sie Glastemperaturen von unter 130°C auf, wodurch die Wärmeformbeständigkeit zu wünschen übrig läßt.

In der US-PS 4 219 461 werden flüssigkristalline Polyester beschrieben, aufgebaut aus Einheiten die sich von 4-Hydroxybenzoesäure, 2,6-Hydroxynaphthalincarbonsäure, Hydrochinon und Terephthalsäure ableiten. Solche Polyester haben jedoch keine ausreichende Wärmeformbeständigkeit. Das gleiche gilt für die aus der DE-OS 3 325 705 bekannten flüssigkristallinen Polyester, die aus Einheiten aufgebaut sind, die sich von 4-Hydroxybenzoesäure, Terephthalsäure und/oder Isophthalsäure sowie 2,7-Dihydroxynaphthalin und gegebenenfalls Hydrochinon ableiten.

Aus der EP-Anmeldung 72540 sind auch aromatische Polyester auf Basis Terephthalsäure, 4-Hydroxybenzoesäure und Hydrochinon, die tertiäre Alkylreste mit mindestens 5 Kohlenstoffatomen als Substituenten haben, bekannt. Solche Polyester sind jedoch erst bei Temperaturen oberhalb 300°C verarbeitbar. Über ihre Wärmeformbeständigkeit werden keine Aussagen gemacht.

Es war deshalb die technische Aufgabe gestellt, vollaromatische flüssigkristalline Polyester zur Verfügung zu stellen, die niedrige Verarbeitungstemperaturen erlauben, jedoch gute Dauergebrauchseigenschaften bei erhöhter Temperatur haben und sich zudem durch eine geringe Eigenfarbe, glatte Oberfläche und gute Chemikalienbeständigkeit auszeichnen.

Diese Aufgabe wird gelöst durch die eingangs definierten vollaromatischen mesomorphen Polyester.

Die neuen vollaromatischen mesomorphen Polyester haben den Vorteil, daß sie keiner hohen Verarbeitungstemperatur bedürfen, und darüber hinaus auch bei erhöhter Temperatur gute Dauergebrauchseigenschaften aufweisen. Ferner zeichnen sich die neuen vollaromatischen Polyester durch hohe Steifigkeit sowie Zähigkeit aus und haben eine glatte abriebfeste Oberfläche sowie eine geringe Eigenfarbe und gute Chemikalienbeständigkeit.

Es ist bemerkenswert und überraschend, daß Polyester, die bis zu 45 Mol% aus gewinkelten und lateral substituierten Einheiten aufgebaut sind, eine flüssigkristalline Phase bilden.

Der flüssigkristalline Zustand der Polyester kann mit dem Polarisationsmikroskop nach einer in der DE-AS 25 20 819 beschriebenen Methode nachgewiesen werden. Zwischen gekreuzten Polarisatoren weisen die Polyesterschmelzen, die in einer Schichtdicke von mindestens 10 µm zwischen Glasplatten aufgetragen sind, Texturen auf, die einer mesomorphen Phase zugeordnet werden können.

Die erfindungsgemäßen Polyester sind aufgebaut aus

a) 5 bis 25 Mol%, insbesondere 9 bis 22 Mol% wiederkehrenden Einheiten der Formel I

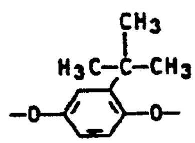

I

Als Ausgangsverbindung verwendet man vorteilhaft t-Butylhydrochinon.

b) 5 bis 25 Mol%, insbesondere 9 bis 22 Mol% wiederkehrenden Einheitender Formel II

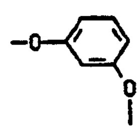

II

Als Ausgangsverbindung verwendet man zweckmäßig Resorcin.

c) Eine der Summe aus a) und b) entsprechenden molaren Menge an wiederkehrenden Einheiten der Formel III

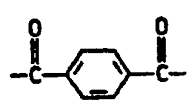

III

Als Ausgangsverbindung verwendet man vorzugsweise Terephthalsäure.

d) mindestens 10 Mol% wiederkehrenden Einheiten der Formel IV

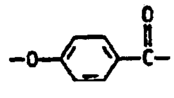

IV

Als Ausgangsverbindung verwendet man z.B. 4-Hydroxybenzoesäure.

Die Summe der molaren Anteile der Komponenten a), b), c) und d) ergibt jeweils 100 Mol%.

Das molare Verhältnis von Hydroxylgruppen enthaltenden Monomeren (a, b) zu Carboxylgruppen enthaltenden Monomeren (c) liegt im Bereich von 0,9 :1 bis 1,1 :1, vorzugsweise 0,95 :1 bis 1,05 :1 und insbesondere werden etwa äquivalente Mengen dieser Monomeren eingesetzt.

Anstatt der nichtderivatisierten Ausgangsverbindungen sind auch deren esterbildenden Derivate geeignete Ausgangsverbindungen, wie die entsprechenden Carbonsäurechloride, Carbonsäureester oder mit niederen Fettsäuren veresterte Hydroxyverbindungen.

Besonders bevorzugt sind Polyester die mindestens 30 Mol% wiederkehrende Einheiten der Formel IV enthalten.

Bevorzugte vollaromatische mesomorphe Polyester haben eine Glasübergangstemperatur von ≥ 135°C. Die Glastemperatur soll dabei gemessen werden mit der DSC-Methode, wie sie beschrieben ist von K.H. Illers in Makromolekulare Chemie 127 (1969), Seiten 1ff. Die vollaromatischen mesomorphen Polyester nach der Erfindung bilden bei < 300°C, insbesondere < 280°C eine flüssigkristalline fadenbildende Schmelze. Bevorzugt sind auch flüssigkristalline Polyester, die bei einer Temperatur > 220°C und < 280°C eine Teilkristallinität aufweisen.

Die erfindungsgemäßen Copolyester lassen sich erhalten durch eine Reihe von Techniken, wie sie beispielsweise in der US-A 4 375 530 und US-A 4 118 372 beschrieben sind.

Besonders vorteilhaft erhält man die erfindungsgemäßen Polyester durch Kondensation unter Verwendung von Anhydriden niederer Fettsäuren, insbesondere Essigsäureanhydrid und gegebenenfalls unter Mitverwendung von Katalysatoren bei erhöhter Temperatur. Hierbei werden die trockenen Ausgangsverbindungen zusammen mit überschüssigem Fettsäureanhydrid, letzteres vorteilhaft in einem mindestens 5%igen molaren Überschuß, bezogen auf die vorhandenen Hydroxygruppen, in einer Inertgasatmosphäre auf Rückflußtemperatur erhitzt. Das Reaktionsgemisch wird dabei z.B. bis zu höchstens 5 Stunden, vorzugsweise bis zu 2 Stunden auf einer Temperatur von 150 bis 200°C gehalten, anschließend wird die Temperatur z.B. innerhalb von 2 bis 2 1/2 Stunden auf 300 bis 350°C gesteigert. Fettsäure und Fettsäureanhydrid werden abdestilliert. Zur Vervollständigung der Reaktion ist es zweckmäßig, gegen Ende der Kondensation verminderten Druck,z.B. bis zu 5 mbar, anzuwenden.

Bemerkenswert und nicht vorherzusehen bei der Anwendung von einer einzigen Reaktionsstufe ist zunächst die problemlose und vollständige Reaktion auch ohne Katalysatorzusatz zu den gewünschten Polymeren in einer relativ kurzen Zeit. Dies ist umso bemerkenswerter, als durch die Vielzahl chemisch unterschiedlicher Hydroxygruppen eine Abstufung der Reaktivitäten und damit ein mangelhafter polymerer Aufbau zu erwarten wäre.

Die so erhaltenen vollaromatischen flüssigkristallinen Polyester können in festem Zustand, z.B. bei einer Temperatur von 150 bis 250°C, weiterkondensiert werden bis zur gewünschten Viskosität. Diese Nachkondensation in fester Phase kann sowohl vor als auch nach einer thermoplastischen Verarbeitung erfolgen.

Die Polyester gemäß der Erfindung können durch übliche Zusatzstoffe wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- oder pulverförmige Füllstoffe und Verstärkungsmittel, Keimbildungsmittel oder Weichmacher modifiziert werden. Solche Stoffe werden in den üblichen wirksamen Mengen angewandt.

Die Stabilisatoren können den Polymeren in jedem Stadium der Herstellung oder den fertigen Polymeren zugesetzt werden. Vorzugsweise werden die Stabilisatoren zu einem frühen Zeitpunkt zugesetzt um zu verhindern, daß die Zersetzung bereits beginnt, bevor die Polymeren geschützt werden können.

Zu den Oxidationsverzögerern und Wärmestabilisatoren gehören diejenigen die allgemein zu Polymeren zugesetzt werden wie Halogenide von Metallen der Gruppe I des Periodischen Systems z.B. von Natrium, Kalium oder Lithium, wie Chloride, Bromide oder Iodide mit Kupfer-I-halogeniden wie Chloriden, Bromiden oder Iodiden, sterisch gehinderte Phenole, Hydrochinone, verschiedene substituierte Vertreter dieser Gruppen und Kombinationen derselben in Konzentrationen bis zu 1 Gew.%, bezogen auf das Polymere. Geeignete UV-Stabilisatoren sind beispielsweise substituierte Resorcine, Salicilate, Benztriazole, Benzophenon und dergleichen sowie Mischungen derselben. Solche UV-Stabilisatoren werden in der Regel in Mengen bis zu 2 Gew.% auf das Polymere angewandt.

Ferner können zugesetzt werden organische Farbstoffe wie Nigrosin, Pigmente wie Titandioxid, Cadmiumsulfid, Cadmiumsulfid-Selenide, Phthalocyanine, Ultramarinblau oder Ruß. Farbstoffe und Pigmente werden im allgemeinen in Mengen bis zu 5 Gew.% angewandt.

Geeingnete Zusatzstoffe sind ferner faser- oder pulverförmige Füllstoffe und Verstärkungsmittel wie Kohlenstoff-Fasern, Glas-Fasern, amorphe Kieselsäure, Asbest, Calciumsilikat, Aluminiumsilikat, Magnesiumcarbonat, Kaolin, Kreide, gepulverter Quarz, Glimmer, Feldspat, Füll- und Verstärkungsmittel werden in der Regel in Mengen bis zu Gew.% der so ausgerüsteten Masse eingesetzt.

Geeignete Keimbildungsmittel sind beispielsweise Talkum, Calciumfluorid, Natriumphenylphosphinat, Aluminiumoxid oder feinteiliges Polytetrafluorethylen.

Schließlich sind geeignete Zusatzstoffe Weichmacher in Mengen bis zu 20 Gew.% wie Phthalsäuredioctylester, Phthalsäuredibenzylester, Phthalsäurebutylbenzylester, Kohlenwasserstoffe, n-Butylbenzolsulfonamid oder o- und p-Toluolethylsulfonamid.

Die erfindungsgemäßen vollaromatischen flüssigkristallinen Polyester eignen sich zur Herstellung von Fäden, Folien, Schäumen und technischen Formteilen durch Spritzguß, Pressen oder Extrusion.

Die aus den erfindungsgemäßen Polyestern hergestellten Formteile zeichnen sich durch hervorragende mechanische Eigenschaften wie Steifigkeit, Festigkeit und Zähigkeit aus. Sie sind außerordentlich chemikalienresistent. Zudem besitzen sie eine hohe Wärmeformbeständigkeit und eine glatte abriebfeste Oberfläche. Die erfindungsgemäßen Polyester eignen sich daher hervorragend zur Herstellung von Formteilen für die Elektro-und Datentechnik, den Fahrzeugbau und andere technische Bereiche. Sie können aber auch als Überzugs- und Beschichtungsmittel pulverförmig dispergiert oder als Film verwendet werden.

Die Erfindung sei an folgenden Beispielen veranschaulicht.

Beispiel 1

0,2 mol Terephthalsäure, 0,26 mol 4-Hydroxybenzoesäure, 0,1 mol t-Butylhydrochinon, 0,1 mol Resorcin sowie 0,86 mol Essigsäureanhydrid wurden in einem Kolben mit Rührer, Stickstoffeinleitung und einem Destillationsaufsatz eingewogen und unter $N_2$-Atmosphäre in einem Metallbad auf 100°C erhitzt. Die Temperatur wurde dann in 30′ auf 150°C, in weiteren 100′ auf 200°C und anschließend in 120′ auf die Endtemperatur von 325°C erhöht.

Anschließend wurde der Druck auf 560 mbar und dann alle 10′ auf die Hälfte verringert. Der Druck am Ende der Reaktion betrug 80 mbar. Man erhielt eine hochviskose, fadenbildende Schmelze. Polymerschmelze und erstarrtes Polymere zeigten einen perlmuttartigen Glanz. Aus DSC-Messungen ergab sich eine Glastemperatur Tg von 145°C. Die inhärente Viskosität betrug 1,6 dl/g, gemessen in 0,1 gew.%iger Lösung in Pentafluorphenol bei 60°C. Das Polymerisat bildete bei 280°C eine fadenbildende flüssig-kristalline Schmelze.

Beispiel 2

0,2 mol Terephthalsäure, 0,26 mol 4-Hydroxybenzoesäure, 0,06 mol t-Butylhydrochinon, 0,14 mol Resorcin sowie 0,86 mol Essigsäureanhydrid wurden wie in Beispiel 1 beschrieben, kondensiert. Die Endtemperatur betrug 325°C. Am Ende der Umsetzung betrug der Druck 30 mbar. Das erhaltene Polymere war hochviskos und fadenbildend. Die DSC-Diagramme zeigten eine Glastemperatur Tg von 142°C sowie einen endothermen Schmelzpunkt bei 260°C. Die inhärente Viskosität betrug 1,1 dl/g. Das Polymere ließ sich bei einer Temperatur von 290°C aus der Schmelze verarbeiten.

## Ansprüche

1. Vollaromatische mesomorphe Polyester die unterhalb von 300°C eine flüssigkristalline fadenbildende Schmelze bilden, aufgebaut aus

a) 5 bis 25 Mol% wiederkehrenden Einheiten der Formel I

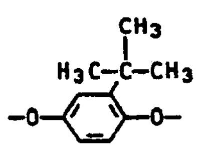

(I)

b) 5 bis 25 Mol% wiederkehrenden Einheiten der Formel II

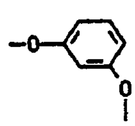

(II)

c) 10 bis 50 Mol% wiederkehrenden Einheiten der Formel III

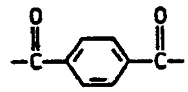

(III)

und

d) mindestens 10 Mol% wiederkehrenden Einheiten der Formel IV

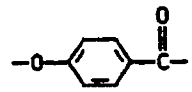

(IV)

wobei die Summe der molaren Anteile der Komponenten a), b), c) und d) jeweils 100 Mol% ergibt und das molare Verhältnis der Komponenten a)+b) zur Komponente c) im Bereich von 0,9 :1 bis 1,1 :1 liegt.

2. Vollaromatische Polyester nach Anspruch 1, dadurch gekennzeichnet, daß die Komponente d) zu mindestens 30 Mol% enthalten ist.

3. Verfahren zur Herstellung von Polyestern nach den Ansprüchen 1 und 2, dadurch gekennzeichnet, daß die Monomeren als nichtderivatisierte Hydroxy- bzw. Carboxyverbindungen eingesetzt werden und unter Zusatz von Fettsäureanhydriden bei einer Temperatur von 150 bis 350°C in einer einzigen Reaktionsstufe unter Abdestillieren von Fettsäure und Fettsäureanhydrid umgesetzt werden.

4. Verfahren nach Anspruch 3, dadurch gekennzeichnet, daß man den so erhaltenen Polyester in fester Phase bei einer Temperatur von 150 bis 250°C nachkondensiert.

5. Verwendung von vollaromatischen Polyestern nach den Ansprüchen 1 bis 4 zur Herstellung von Fasern, Folien, Überzügen und Formteilen.

6. Formkörper, erhältlich aus vollaromatischen Polyestern gemäß den Ansprüchen 1 und 3 oder wie gemäß den Ansprüchen 3 und 4 erhalten, als wesentlichen Komponenten.

## Revendications

1. Polyesters mésomorphes totalement aromatiques qui forment un produit de fusion filiforme de cristaux liquides en dessous de 300°C, composés de

a) 5 à 25% en moles de motifs de formule I

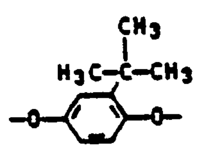

(I)

b) de 5 à 25% en moles de motifs de formule II

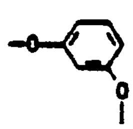

(II)

c) de 10 à 50% en moles de motifs de formule III

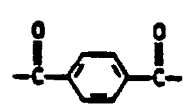

(III)

et

d) au moins 10% en moles de motifs de formule IV

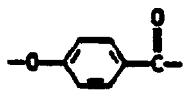

(IV)

la somme des parties molaires des composants a), b), c) et d) étant de 100% en moles et le rapport molaire des composants a)+b) au composant c) étant compris entre 0,9 :1 et 1,1 :1.

2. Polyesters totalement aromatiques selon la revendication 1, caractérisés en ce que le composant d) représente au moins 30% en moles.

3. Procédé de préparation des polyesters selon l'une ou l'autre des revendications 1 et 2, caractérisé en ce qu'on utilise comme monomères des composés hydroxylés ou carboxylés sans formation de dérivés et on les fait réagir avec addition d'anhydrides d'acides gras à une température de 150 à 350°C en une seule étape de réaction avec distillation des acides gras et des anhydrides d'acides gras.

4. Procédé selon la revendication 3, caractérisé en ce qu'on termine la condensation du polyester ainsi obtenu en phase solide à une température de 150 à 250°C.

5. Utilisation des polyesters totalement aromatiques selon les revendications 1 à 4 pour la préparation de fibres, feuilles, couches et autres formes.

6. Objets obtenus à partir des polyesters totalement aromatiques selon les revendications 1 et 3 ou selon les revendications 3 et 4, en tant que composants essentiels.

**Claims**

1. A wholly aromatic mesomorphic polyester which gives a liquid crystalline filament-forming melt below 300°C and consists of

a) from 5 to 25 mol% of repeating units of the formula I

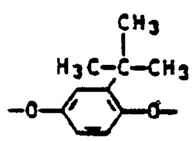

(I)

b) from 5 to 25 mol% of repeating units of the formula II

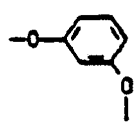

(II)

c) from 10 to 50 mol% of repeating units of the formula III

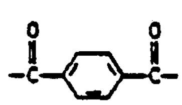

(III)

and

d) not less than 10 mol% of repeating units of the formula IV

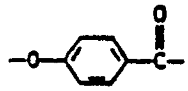

(IV)

the sum of the molar amounts of components a), b), c) and d) being 100 mol%, and the molar ratio of components a) and b) to component c) being from 0.9 :1 to 1.1 :1.

2. A wholly aromatic polyester as claimed in claim 1, which contains not less than 30 mol% of component d).

3. A process for the preparation of a polyester as claimed in claims 1 and 2, wherein the monomers are used in the form of nonderivatized hydroxyl or carboxyl compounds and are reacted with the addition of a fatty acid anhydride at from 150 to 350°C in a single reaction step, with removal of the fatty acid and fatty acid anhydride by distillation.

4. A process as claimed in claim 3, wherein the resulting polyester is subjected to post-condensation in the solid phase at from 150 to 250°C.

5. Use of a wholly aromatic polyester as claimed in claims 1 to 4, for producing fibers, films, coatings and moldings

6. A molding obtainable from a wholly aromatic polyester as claimed in claims 1 and 3 or as claimed in claims 3 and 4 as the essential component.